# EUROPÄISCHE PATENTANMELDUNG

(11) **EP 4 039 096 A1**
(43) Veröffentlichungstag der Anmeldung: **10.08.2022**
(21) Anmeldenummer: 22155578.2
(22) Anmeldetag: 08.02.2022
(51) Int. Cl.: A23B 4/015, A23B 5/015, A23B 7/015, A23B 9/06, A23L 3/32, A01N 1/00

(54) **VERFAHREN ZUM PARALYSIEREN VON PARASITEN IN NAHRUNG, INSBESONDERE IN EINEM LEBENS- ODER FUTTERMITTEL UND DAMIT HERGESTELLTES LEBENSMITTEL MIT PARALYSIERTEN PARASITEN**

(30) Priorität: 08.02.2021 DE 102021102884
(71) Anmelder: Elea Service GmbH, 49610 Quakenbrück (DE)
(72) Erfinder: Kiessling, Martina, 49610 Quakenbrück (DE); Siemer, Claudia, 49593 Bersenbrück (DE); Töpfl, Stefan, 49076 Osnabrück (DE)
(74) Vertreter: Grünecker Patent- und Rechtsanwälte PartG mbB

(57) **Zusammenfassung**

Die vorliegende Erfindung betrifft ein Verfahren zum Paralysieren von Parasiten in Nahrung, insbesondere in einem Lebens- oder Futtermittel. Um Parasiten einfach und effektiv zu paralysieren, ohne die Nahrung im Wesentlichen zu verändern, und insbesondere die Denaturierung von Proteinen zu vermeiden, wird die Nahrung erfindungsgemäß einem niederfrequenten, gepulsten elektrischen Feld ausgesetzt, das die Zellen des Parasiten irreversibel elektroporiert.

## Beschreibung

Die vorliegende Erfindung betrifft ein Verfahren zum Paralysieren von Parasiten in Nahrung, insbesondere in einem Lebens- oder Futtermittel.

Die vorliegende Erfindung betrifft ferner Nahrung, insbesondere ein Lebens- oder Futtermittel mit paralysierten Parasiten.

Parasiten sind Organismen, die einen in der Regel größeren Organismus einer anderen Art als Wirt missbraucht. Der Wirt dient dem Parasiten für die Nahrungsversorgung und in einigen Fällen auch als Habitat/Lebensraum. Der Parasitenbefall ist für den Wirt meistens nicht lebensbedrohlich, er wirkt sich allerdings im Regelfall negativ auf Wachstum, Wohlbefinden, Infektanfälligkeit, Fortpflanzung und/oder Lebensdauer des Wirts aus.

Im Sinne der vorliegenden Erfindung zählen Mikroorganismen und Pilze nicht zu Parasiten.

Beim Menschen können parasitäre Infektionen auftreten. Einige Parasiten übertragen dabei Krankheitserreger auf den Menschen, die zum Teil tödliche Krankheiten verursachen. Als Beispiele sind hier Toxoplasmose und Trichinellose genannt. Die Parasiteninfektion erfolgt meist durch den Verzehr roher oder unzureichend behandelter Lebensmittel, die nicht gründlich genug abgewaschen, geschält, erhitzt oder eingefroren wurden.

Aus der DE 10 2007 007 572 A1 ist zwar bekannt, dass man mit Hilfe von Mikrowellen und UV-Strahlen Geräte entkeimen und Parasiten abtöten kann. Mikrowellen erwärmen allerdings das Lebensmittel. Die dabei eingesetzten hochfrequenten Wechselfelder und die lange Behandlungsdauer von mehreren Minuten sind daher für die Behandlung vieler Lebensmittel, insbesondere Rohwaren, ungeeignet.

Die US 2013 / 0 202 766 A1 offenbart Vorrichtungen und ein Verfahren zur Verringerung der mikrobiellen Kontamination in Lebensmitteln, durch Verwendung von elektrischen Feldern niedriger Spannung ("low voltage high electric fields"), mit denen Zellen abgetötet werden sollen. Aus der US 2015 / 0 125 580 A1 sind Verfahren und Vorrichtungen zur Herstellung von essbaren Produkten bekannt. Dabei wird eine irreversible Niederspannungselektroporation eingesetzt, um die essbaren Produkte haltbarer zu machen.

Bei einigen Lebensmitteln, beispielsweise ungekochter Mettwurst oder rohen Fischprodukten, ist ein thermisches Abtöten von Parasiten nicht möglich. Das Erhitzen würde die Nahrung auf unerwünschte Weise verändern und Proteine denaturieren, die unverändert bleiben sollen. Die Alternative des Einfrierens tötet nicht alle Parasiten ab und ist zudem energie- und kostenintensiv.

Bei mit Fadenwürmer kontaminierte Nahrung, z.B. bei frischen Fischen, die in der Regel Nematoden enthalten, ist es wünschenswert, zumindest die Bewegungsfähigkeit der Parasiten während der Lagerung einzuschränken. Hierdurch würde der Konsument keinesfalls sich bewegende Fadenwürmer sehen. Ein finales Abtöten könnte dann beim Kochen vor dem Verzehr stattfinden. Werden die Parasiten in den Eingeweiden paralysiert, also gelähmt und handlungsunfähig gemacht, kann zudem verhindert werden, dass die Parasiten ins Muskelgewebe des Wirts übertreten und ein Ausnehmen, Entfernen der Eingeweide, ausreicht, um die Parasiten vollständig zu entfernen.

Die Aufgabe der vorliegenden Erfindung besteht somit darin, Parasiten in Nahrung auf einfache und ökonomische Weise zu paralysieren, ohne das Lebensmittel wesentlich zu verändern und möglichst ohne Proteine der Nahrung zu denaturieren.

Die vorliegende Erfindung löst diese Aufgabe durch ein Verfahren zum Paralysieren von Parasiten in Nahrung, insbesondere in einem Lebens- oder Futtermittel, indem die Nahrung einem niederfrequenten, gepulsten elektrischen Feld ausgesetzt wird, das die Zellen des Parasiten irreversibel elektroporiert.

Es hat sich überraschenderweise gezeigt, dass Parasiten in Nahrung paralysiert werden können, indem die Zellen des Parasiten mittels eines niederfrequenten, gepulsten elektrischen Feldes elektroporiert werden.

Die Elektroporation ist eine Methode, Zellmembrane permeabel zu machen. Die Elektroporation wird in der Molekularbiologie beispielsweise zum Transfer von Nukleinsäuren in prokaryotische oder eukaryotische Zellen eingesetzt. In der Lebensmittel- und Bioverfahrenstechnik wird die Elektroporation zur Verbesserung von Massentransportprozessen eingesetzt, unter anderem um den Acrylamidgehalt in frittierten Kartoffelprodukten zu senken.

Die erfindungsgemäß zum Paralysieren von Parasiten eingesetzten niederfrequenten Felder von unter 9 KHz haben sich überraschenderweise als sehr effektiv erwiesen, um Parasiten in Nahrung innerhalb kürzester Zeit mit einem sehr geringen Energieaufwand handlungsunfähig zu machen. Dabei bleibt die behandelte Nahrung nahezu unverändert. Die Proteine der Nahrung werden nicht denaturiert.

Paralysierte Parasiten sind gelähmt und dadurch handlungsunfähig. Auch durch das elektrische Feld abgetötete Parasiten zählen zu paralysierten Parasiten im Sinne dieser Erfindung. Abgetötet Parasiten sind als dauerhaft handlungsunfähig einzustufen und somit eine Sonderform paralysierter Parasiten.

Die erfindungsgemäße Nahrung, insbesondere das Lebens- oder Futtermittel mit paralysierten bzw. abgetöteten Parasiten zeichnet sich dadurch aus, dass es gemäß dem Verfahren der vorliegenden Erfindung hergestellt wurde. Eine solche Nahrung ist daran zu erkennen, dass sie bis auf irreversibel elektroporierte Zellmembranen im Wesentlichen unverändert ist.

Die Erfindung kann mit den folgenden, jeweils für sich vorteilhaften und beliebig miteinander kombinierbaren Weiterentwicklungen und vorteilhaften Ausgestaltungen weiter verbessert werden.

Als Hochspannung im Sinne der vorliegenden Erfindung gelten insbesondere Spannung von über 10 kV. Gemäß einer Ausführungsform kann das elektrische Feld mit einer Hochspannung von über 15 kV, vorzugsweisen von 15 bis 50 kV und besonders bevorzugt von 20 bis 25 kV angelegt wird.

Gemäß einer Ausführungsform kann durch das elektrische Feld Energie von wenigstens 1 kJ/kg, vorzugsweise von 2 bis 100 kJ/kg in die Nahrung eingebracht werden. Ein Energieeintrag in dieser Größenordnung ist überraschenderweise ausreichend, um eine irreversible Elektroporation beim Parasiten zu erzielen, was die Parasiten in der Nahrung paralysiert bzw. abtötet.

Gemäß einer Ausführungsform kann ein elektrisches Feld von über 1 kV/cm, vorzugsweise von 3 bis 10 kV/cm angelegt werden. Derartige Feldstärken sind funktionell für das Paralysieren bzw. Abtöten von Parasiten und lassen sich mit handelsüblichen industriellen Kondensatoren, beispielsweise Marx-Kondensatoren erzielen. Diese Feldstärken vermeiden zudem, dass unerwünschte thermische Effekte in der Nahrung auftreten, die zu unerwünschten Änderungen in der Struktur bzw. chemischen Zusammensetzung der Nahrung führen.

Zur Erzeugung der Pulse kann als Impulsgenerator vorzugsweise ein Hochspannungsimpulsgenerator eingesetzt werden, der niederfrequente elektrische Felder in Form von kurzen Pulsen im Mikro- bis Millisekundenbereich einer hohen Spannung im Kilovoltbereich erzeugt. Marx-Generatoren können als Hochspannungsimpulsgeneratoren eingesetzt werden.

Die Parasiten können beispielsweise mit wenigstens zehn elektrischen Pulsen des niederfrequenten elektrischen Feldes paralysiert bzw. abgetötet werden. Im Sinne einer Zeit- und Energieoptimierung können die Parasiten mit 10 bis 400 elektrischen Pulsen, bevorzugt 50 bis 10 elektrischen Pulsen paralysiert bzw. abgetötet werden.

Es hat sich überraschenderweise herausgestellt, dass gute Ergebnisse erzielt werden, um Parasiten zu paralysieren bzw. abzutöten, wenn die Nahrung einem niederfrequenten elektrischen Feld mit Pulsen im Mikro- bis Millisekundenbereich ausgesetzt wird, die mit einer Rate von 1 Hz bis 1 KHz wiederholt werden. Besonders gute Ergebnisse wurden mit exponentiell fallenden oder Rechteckpulsen erzielt.

Das niederfrequente elektrische Feld kann sowohl durch Direktkontakt eines Kondensators bzw. dessen Elektroden mit der Nahrung, als auch über leitende Fluide erzeugt werden, wobei die Nahrung ganz oder teilweise in die leitenden Fluide eingelegt wird. Dabei können verschiedene Elektrodenformen zur Anwendung kommen, beispielsweise Platten-, Gitter-, Hohl-, konische oder Durchflusselektroden.

Das angelegte niederfrequente elektrische Feld kann ein nicht-thermisch wirkendes elektrisches Feld sein, bei dem die Energieobergrenze so bemessen ist, dass im Wesentlichen keine Erwärmung der Nahrung im Sinne einer Ohm'schen Erhitzung stattfindet. Bei dieser Ausführungsform sollte während der Elektroporation keine Temperatursteigerung der Nahrung von mehr als 15 °C stattfinden. Der Temperaturanstieg sollte insbesondere so gering sein, dass keine thermisch induzierte Proteindenaturierung hervorgerufen wird.

Gemäß einer Ausführungsform kann eine nicht-konservierte Nahrung dem elektrischen Feld ausgesetzt werden. Es werden also Parasiten in nicht-konservierter Nahrung paralysiert bzw. abgetötet.

Unter Konservieren ist ein Prozess bei der Behandlung von Nahrung, insbesondere von Lebens- und Futtermitteln zu verstehen, der diese länger haltbar macht, indem Verderben gestoppt oder stark verlangsamt wird, wobei zugleich Nährwert, Geschmack, Farbe und Beschaffenheit der Nahrung möglichst erhalten bleiben. Gängige Konservierungsverfahren sind Erwärmen, Einfrieren, UV-Bestrahlung, Trocknung oder eine chemische Behandlung wie beispielsweis Salzen oder Pökeln. Zu nicht-konservierter Nahrung gehören insbesondere rohe Nahrung.

Gemäß einer Ausführungsform kann die Nahrung, nachdem sie dem elektrischen Feld ausgesetzt und elektroporiert wurde, in einer Schutzgasumgebung aufbewahrt werden. Ein Abtöten, zumindest aber eine Paralyse in Kombination mit einem Schutzgas reicht aus, um die Bewegungsfähigkeit der Parasiten zumindest während der Lagerung einzuschränken. Hierdurch würde der Konsument keinesfalls sich bewegende Parasiten in der frischen Nahrung sehen. Ein finales Abtöten findet dann beim Kochen vor dem Verzehr statt. Zudem hat sich die Kombination von Behandlung mit elektrischem Feld und Schutzbehandlung als besonders effektiv zum dauerhaften Paralysieren bzw. Abtöten herausgestellt. Bei einer kombinierten Behandlung aus Elektroporation und Schutzgas scheint eine überraschend synergistische Wirkung beim Abtöten von Parasiten erreicht werden zu können.

Als Schutzgas wird ein Gas oder Gasgemisch bezeichnet, das die Aufgabe hat, die Luft der Erdatmosphäre zu verdrängen, vor allem den Sauerstoff der Luft. Schutzgas wird häufig in der Verpackung von Nahrung, insbesondere Lebensmitteln verwendet. Die Schutzgasatmosphäre besteht je nach zu verpackendem Lebensmittel aus natürlichen, geruchlosen und geschmacksneutralen Bestandteilen der Luft, z.B. Kohlenstoffdioxid oder Stickstoff.

Nahrung im Sinne der vorliegenden Erfindung ist alles Essbare, Trinkbare, was ein Mensch oder ein Tier zur Ernährung, zum Aufbau und zur Erhaltung des Organismus braucht und zu sich nimmt. Zu Nahrung gehören insbesondere Leben- und Futtermittel.

Lebensmittel sind Substanzen, die konsumiert werden, um den menschlichen Körper zu ernähren. Der Begriff Lebensmittel umfasst als Oberbegriff sowohl Trinkwasser als auch Nahrungsmittel. Trinkwasser besteht aus Wasser und darin gelösten Mineralstoffen. Die Europäische Lebensmittelbasisverordnung (EG Nr. 178/2002) definiert Lebensmittel als "alle Stoffe oder Erzeugnisse, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden."

Unter Nahrungsmitteln sind im Wesentlichen aus Mikronährstoffen bestehende Substanzen zu verstehen, die konsumiert werden, um den menschlichen Körper zu ernähren. Makronährstoffe, also Kohlenhydrate, Fette/Lipide und Proteine führen dem Menschen chemisch gebundene Energie zu.

Die Nahrung, in der erfindungsgemäß Parasiten paralysiert bzw. abgetötet werden, kann ein Nahrungsmittel pflanzlichen oder tierischen Ursprungs sein.

Gemäß einer weiteren Ausführungsform kann das Nahrungsmittel, in dem Parasiten paralysiert bzw. abgetötet werden, ausgewählt sein aus der Gruppe bestehend aus Obst, Gemüse, Pflanzenknollen, Hülsenfrüchte, Getreide, Eier, Fleisch, Wurstwaren, Milchprodukte und Fische.

Zu Milchprodukten gehören beispielsweise Butter, Käse, Joghurt, Milch, Quark, Sahne, Speiseeis, Kefir, Molke. Das Lebensmittel, in dem Parasiten erfindungsgemäß abgetötet werden, kann beispielsweise rohes Fleisch von landwirtschaftlichen Nutztieren, beispielsweise Schweinen, Rindern, Geflügel oder von Wildtieren, beispielsweise Wildschweinen, Elchen, Hirschen, Rehen, Hasen, Fasanen, Rebhühnern, Wildenten, Strauße oder Kängurus sein.

Gemäß einer weiteren Ausführungsform kann die Nahrung, in der erfindungsgemäß Parasiten paralysiert bzw. abgetötet werden, ein Futtermittel sein. Das Futtermittel kann ein Barf sein. Barf ist eine Methode zur Ernährung fleischfressender Haustiere, die primär für Haushunde entwickelt wurde. Barfen werden aus frischem oder tiefgekühltem Fleisch, Innereien, Knochen und Fisch zusammengestellt. Das Futter wird mit Obst und Gemüse ergänzt und roh verfüttert. Bei Bedarf können Getreideprodukte und Futterzusätze zugegeben werden.

Der in der Nahrung paralysierte bzw. abgetötete Parasit kann ausgewählt sein aus der Gruppe der Protisten, der Insekten und der Würmer. Protisten sind mikroskopische Lebewesen, einschließlich ein- bis wenigzelliger Eukaryoten, also Algen und Protozoen. Pilze sind keine Parasiten im Sinne der vorliegenden Erfindung.

Der paralysierte bzw. abgetötete Parasit kann ein Protist sein, der vorzugsweise ausgewählt ist aus der Gruppe bestehend aus: Sarkosporidien, Toxoplasmen und Giardien.

Der paralysierte bzw. abgetötete Parasit kann ein Wurm sein, beispielsweise Erkrankungen durch Lebensmittel übertragende Helminthen, auch Eingeweidewürmer genannt. Der paralysierte bzw. abgetötete Parasit kann ein Wurm sein, der ausgewählt ist aus der Gruppe bestehend aus Plattwürmern und Nematoden (Fadenwürmern), vorzugsweise Trichinen, Spulwürmern, Madenwürmern, Hakenwürmern, Bandwürmern, Echinokokken (Fuchsbandwurm), Saugwürmern, Strudelwürmern und Anisakis.

Auch Larven, sowohl Larven von Würmern als auch Insektenlarven, können Nahrungsparasiten darstellen, die mit dem erfindungsgemäßen Verfahren paralysiert bzw. abgetötet werden können.

Bei einer Ausführungsform des erfindungsgemäßen Verfahrens werden Trichinen in Fleisch paralysiert, vorzugsweise abgetötet. Trichinen sind eine Gattung winziger Fadenwürmer, die beim Menschen Trichinellose auslösen können. Hauptüberträger dieser Parasiten auf den Menschen sind oft Schweine bzw. deren roh als Mett bzw. Gehacktes verzehrtes oder ungenügend gegartes Fleisch, zum Beispiel Schinken. Neben Haus- und Wildschweinen können auch Pferde, Bären oder andere Wildtiere Wirte von Trichinen sein. Mit dem erfindungsgemäßen Verfahren kann die Gefahr einer Trichinellose vermieden werden. Trichinellose ist eine der am häufigsten parasitär verursachten Krankheiten beim Menschen. Symptome dieser Krankheit können von Schwindel, Bauchschmerzen, Erbrechen und Durchfall bis zu Schwäche, Fieber, Muskelschmerzen reichen. Selbst ein tödlicher Krankheitsverlauf ist nicht ausgeschlossen.

Bei einer anderen Ausführungsform des erfindungsgemäßen Verfahrens können Toxoplasmosen in tierischen Produkten paralysiert, vorzugsweise abgetötet werden. Toxoplasmen sind einzellige Protozoen mit parasitärer Lebensweise, die sich in Zellen von Mensch und Tier vermehren. Im Verlauf ihrer Entwicklung lassen sich drei verschiedene Stadien unterscheiden: die sich schnell vermehrende, aktive Form (sogenannte Tachyzoiten), eine "Ruheform", die sich in Zysten organisiert und als Dauerstadien vor allem in Muskulatur und Nervengewebe infizierter Wirte zurückzieht (sogenannte Bradyzoiten) sowie eine umweltresistente Dauerform (sogenannte Oozysten), die mit dem Kot von Katzen ausgeschieden werden. Alle drei Stadien sind für eine Infektion des Menschen von Bedeutung. Grundsätzlich kann sich der Mensch auf verschiedenen Wegen mit Toxoplasmen infizieren, beispielsweise durch den Verzehr von belasteten Lebensmitteln, insbesondere von unzureichend erhitzten oder behandeltem Fleisch und daraus hergestellten Produkten. Auch Obst und Gemüse sowie unzureichend aufbereitetes Trinkwasser können mit Toxoplasmen verseucht sein. Bei gesunden Erwachsenen verläuft eine Toxoplasmose in der Regel ohne Symptome. Selten kommen milde Verlaufsformen mit grippeähnlichen Symptomen oder auch Entzündungen der Netz- und Aderhaut des Auges vor. Allerdings kann eine Toxoplasmose bei Personen mit geschwächtem Immunsystem auch sehr schwer verlaufen. Gefährlich ist eine Infektion insbesondere während der Schwangerschaft, da der Toxoplasmoseerreger auf das ungeborene Kind übertragen werden und es zu Missbildungen und Fehlgeburten kommen kann.

In einer weiteren Ausführungsform können mit dem erfindungsgemäßen Verfahren Nematoden, insbesondere in Fisch abgetötet werden. Nematoden, also Fadenwürmer, können in fast jedem Fisch vorkommen, da Fische die 1,5 bis 3 cm langen Fadenwürmer über die Nahrung aufnehmen. Zum Abtöten von Nematoden in Fischen reicht in der Regel die Erhitzung des Fischfleisches auf mindestens 70 °C oder das Tiefgefrieren auf -20 °C im Kern aus. Auch eine Konservierung in Salz oder Marinieren in einer Lake aus Salz und Essig, wie zum Beispiel beim Bismarckhering, tötet Nematoden normalerweise ab. Als Alternative für diese Verfahren zum Abtöten von Nematoden in Fisch kommt nun das erfindungsgemäße Verfahren in Betracht.

Weitere Anwendung des erfindungsgemäßen Verfahrens sind das Paralysieren bzw. Abtöten von Sarkosporidien, zweiwirtige Protozoen, die meist in landwirtschaftlichen Nutztieren, insbesondere Schwein und Rind auftreten. Der Mensch als Endwirt kann sich über den Verzehr von rohem oder nicht ausreichend durcherhitztem Fleisch anstecken. Eine Infektion mit Sarkosporidien kann bei Menschen symptomlos verlaufen. Es kann allerdings auch zu Erbrechen oder Durchfall kommen.

Eine weitere mögliche Anwendung des erfindungsgemäßen Verfahrens ist das Paralysieren bzw. Abtöten von Giardien. Giardien sind Darmparasiten, die über den Verzehr von kontaminierten Lebensmitteln, einschließlich Trinkwasser übertragen werden können.

Ein anderes Anwendungsgebiet des erfindungsgemäßen Verfahrens ist das Paralysieren, vorzugsweise Abtöten von Echinokokken, also dem Fuchsbandwurm. Der Mensch infiziert sich mit Wurmeiern vom Fuchsbandwurm in der Regel über kontaminierte Waldfrüchte oder Obst und Gemüse.

Auch ein Paralysieren bzw. Abtöten von Anisakis, Würmer, deren Larven über den Verzehr von rohem Fisch auf den Menschen übertragen werden können, ist möglich.

Im Folgenden wird die Erfindung anhand vorteilhafter Ausgestaltungen mit Bezug auf die Zeichnungen und nachfolgenden Versuchsbeispielen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie es im Anwendungsfall notwendig ist.

Es zeigen:
- Fig. 1: eine Grafik, welche das Abtöten von Nematoden mittels des erfindungsgemäßen Verfahrens belegt; und
- Fig. 2: eine weitere Grafik, welche die Inaktivierung von Nematoden mittels des erfindungsgemäßen Verfahrens belegt.

Nachfolgend wird ein beispielhaftes Verfahren zum Abtöten von Parasiten in Nahrung gemäß der vorliegenden Erfindung unter Bezugnahme auf die nachfolgenden Versuchsbeispiele und die Figuren vorgestellt.

### Versuche: Paralysieren/Abtöten von Nematoden mittels eines niederfrequenten, gepulsten elektrischen Feldes.

Bei den erfindungsgemäßen Versuchen wurden Nematoden einem niederfrequenten, gepulsten elektrischen Feld ausgesetzt, um die Zellen der Parasiten irreversibel zu elektroporieren und die Parasiten dadurch zu paralysieren bzw. abzutöten.

In einer ersten Versuchsreihe wurden die Nematoden unter folgenden Bedingungen elektroporiert:
Batchkammer: DIL Batch 500 ml bzw. 1000 ml
Elektrodenabstand: 2,5 cm
Feldstärke: 7,2 kV/cm.

Exponentiell fallende Pulse mit einer Zeitkonstante einiger Mikrosekunden.

In einer ersten Versuchsreihe wurden vier Proben gefahren. Die erste Probe wurde 20 elektrischen Pulsen ausgesetzt. Dies entspricht einem Energieeintrag von 14 kJ/kg.

Die zweite Gruppe wurde 40 Pulsen ausgesetzt. Dies entspricht einem Energieeintrag von 27 kJ/kg.

Die dritte Gruppe wurde 60 Pulsen ausgesetzt. Dies entspricht einem Energieeintrag von 41 kJ/kg.

Die vierte Gruppe wurde 100 Pulsen ausgesetzt. Dies entspricht einem Energieeintrag von 69 kJ/kg.

Die Nematoden wurden in Petrischalen gelegt. Anschließend wurde die Mobilität der Nematoden über einen Zeitraum von 12 Stunden beobachtet. Im Vergleich zu unbehandelten Nematoden war die Mobilität (Lage- und Formänderung) der erfindungsgemäß behandelten Würmer deutlich eingeschränkt, was eine erfolgreiche Paralyse, bis hin zum Abtöten belegt.

Es wurde eine zweite Versuchsreihe durchgeführt.

Die zweite Versuchsreihe entsprach der ersten Versuchsreihe. Der einzige Unterschied war, dass der Elektrodenabstand auf 5 cm vergrößert wurde. Dadurch sank die elektrische Feldstärke auf 3,6 kV/cm und demzufolge der Energieeintrag. Der Energieeintrag war:
- 20 Pulse, 3 kJ/kg;
- 40 Pulse, 6 kJ/kg;
- 60 Pulse, 10 kJ/kg; und
- 100 Pulse, 16 kJ/kg.

Auch die zweite Versuchsreihe hat gezeigt, dass so gut wie gar keine Bewegung bzw. Formänderung der erfindungsgemäß behandelten Würmer stattfindet, was ein Beleg dafür ist, dass die Nematoden effektiv mittels des niederfrequenten elektrischen Feldes elektroporiert und paralysiert bzw. abgetötet werden können.

### Versuche: Paralysieren/Abtöten von Nematoden in rohen Fischen

In einem weiteren Versuch wurden Fische mit Nematoden versetzt und anschließend einem niederfrequenten elektrischen Feld ausgesetzt. Die Versuchsbedingungen waren:
Batchkammer: DIL1000 ml
Feldstärken von 4 bzw. 5 kV/cm

Bei einer Feldstärke von 4 kV/cm wurden die Proben in einer ersten Versuchsreihe 0, 20, 40, 60 Pulsen von 20 kV ausgesetzt, was einem Energieeintrag von 0 kJ/kg bzw. 4 kJ/kg ,8 kJ/kg und 12 kJ/kg entspricht. In einer zweiten Reihe mit einer Feldstärke von 5 kV/cm wurden die Proben 0, 40 und 60 Pulsen von 25 kV ausgesetzt, was einem Energieeintrag von 0 kJ/kg,13 kJ/kg bzw. 19 kJ/kg entspricht.

Die Nematoden wurden den behandelten Fischen entnommen und in Petrischalen gelegt. Anschließend wurden die Nematoden über einen Zeitraum von 48 Stunden regelmäßig überprüft und festgestellt, wie viele der Nematoden sich bewegt bzw. ihre Form geändert haben.

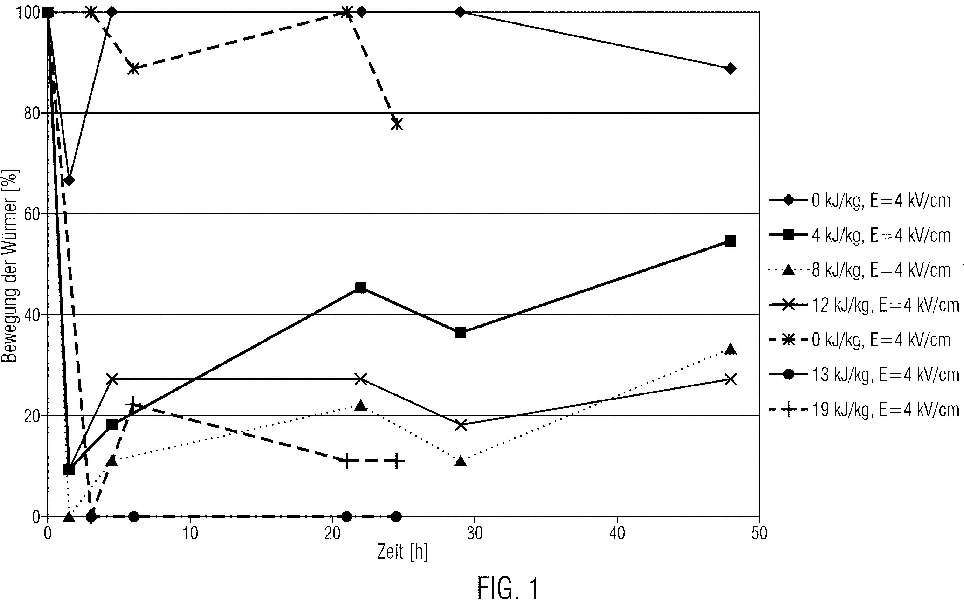

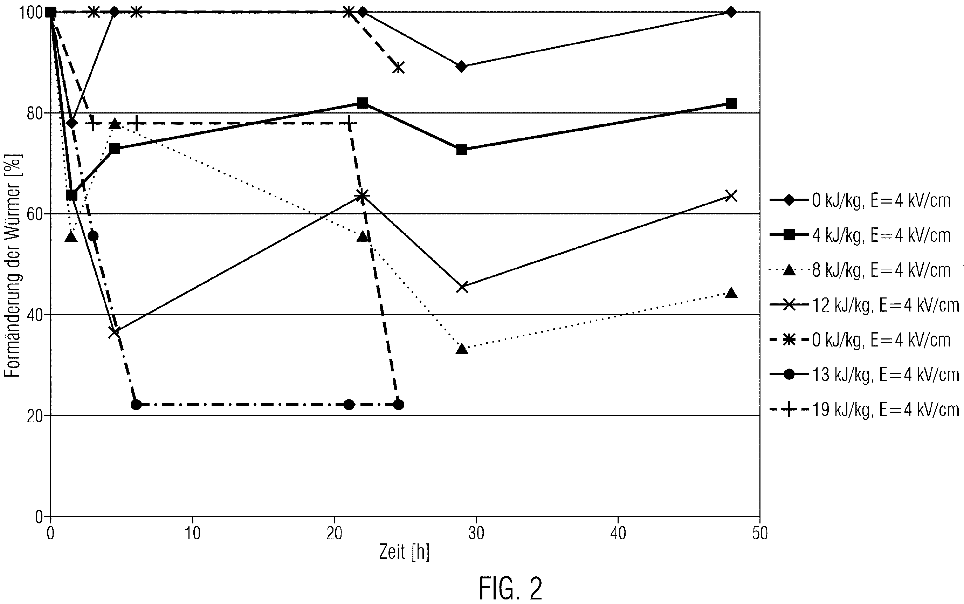

Die Ergebnisse dieses Versuches sind in den Figuren 1 und 2 dargestellt.

Die Graphen der Figuren 1 und 2 zeigen deutlich, dass mittels des erfindungsgemäßen Verfahrens die Mobilität von lebendigen Nematoden in Fischen mittels des erfindungsgemäßen Verfahrens reduziert und die Nematoden demzufolge paralysiert bzw. abgetötet werden können.

## Patentansprüche

1. Verfahren zum Paralysieren von Parasiten in Nahrung, insbesondere in einem Lebens- oder Futtermittel, indem die Nahrung einem niederfrequenten, gepulsten elektrischen Feld einer Hochspannung ausgesetzt wird, das die Zellen des Parasiten irreversibel elektroporiert.

2. Verfahren nach Anspruch 1, wobei durch das elektrische Feld Energie von wenigstens 1 kJ/kg, vorzugsweise von 2 bis 100 kJ/kg in die Nahrung eingebracht wird.

3. Verfahren nach Anspruch 1 oder 2, wobei das elektrische Feld mit einer Hochspannung von über 15 kV, vorzugsweisen von 15 bis 50 kV und besonders bevorzugt von 18 bis 25 kV angelegt wird.

4. Verfahren nach einem der Ansprüche 1 bis 3, wobei die Parasiten mit wenigstens 10 elektrischen Pulsen, vorzugsweisen 10 bis 400 elektrischen Pulsen, besonders bevorzugt 20 bis 100 elektrischen Pulsen abgetötet werden.

5. Verfahren nach einem der Ansprüche 1 bis 4, wobei eine nicht-konservierte Nahrung dem elektrischen Feld ausgesetzt wird.

6. Verfahren nach Anspruch 5, wobei die Nahrung ein Nahrungsmittel pflanzlichen odertierischen Ursprungs ist.

7. Verfahren nach Anspruch 6, wobei das Nahrungsmittel ausgewählt ist aus der Gruppe bestehend aus Obst, Gemüse, Pflanzenknollen, Hülsenfrüchte, Getreide, Eier, Fleisch, Wurstwaren, Milchprodukte und Fische.

8. Verfahren nach einem der Ansprüche 1 bis 7, wobei der abgetötete Parasit ausgewählt ist aus der Gruppe der Protisten, der Insekten und der Würmer.

9. Verfahren nach Anspruch 8, wobei der abgetötete Parasit ein Protist ist, der ausgewählt ist aus der Gruppe bestehend aus: Protozoen und Algen, vorzugsweise Sarkosporidien, Toxoplasmen, und Giardien.

10. Verfahren nach Anspruch 8, wobei der abgetötete Parasit ein Wurm ist, der ausgewählt ist aus der Gruppe bestehend aus: Plattwürmern und Nematoden (Fadenwürmer), vorzugsweise, Trichinen, Spulwürmern, Madenwürmern, Hakenwürmern, Bandwürmern, Echinokokken (Fuchsbandwurm), Saugwürmern, Strudelwürmern und Anisakis.

11. Verfahren nach einem der Ansprüche 1 bis 5, wobei Trichinen in Fleisch abgetötet werden.

12. Verfahren nach einem der Ansprüche 1 bis 5, wobei Toxoplasmosen in Fleisch, Obst und/oder Gemüse abgetötet werden.

13. Verfahren nach einem der Ansprüche 1 bis 5, wobei Nematoden in Fisch abgetötet werden.

14. Verfahren nach einem der Ansprüche 1 bis 5, wobei Insekten und/oder Larven in pflanzlichen Nahrungsmitteln abgetötet werden.

15. Nahrung, insbesondere Lebens- oder Futtermittel mit paralysierten Parasiten, die gemäß dem Verfahren nach einem der Ansprüche 1 bis 14 hergestellt wurde.
